# EUROPEAN PATENT APPLICATION

(11) **EP 4 518 077 A1**
(43) Date of publication of application: **05.03.2025**
(21) Application number: 23195000.7
(22) Date of filing: 04.09.2023
(51) Int. Cl.: H02J 3/38, F03D 9/19, H02J 15/00

(54) **WIND-POWERED HYDROGEN PLANT**

(71) Applicant: Siemens Energy Global GmbH & Co. KG, 81739 München (DE)
(72) Inventor: Runser, Thibaut, 90478 Nürnberg (DE); Arend, Sebastian, 55758 Vollmersbach (DE); Craciun, Bogdan, 18069 Rostock (DE); Herzig, Fabian, 60486 Frankfurt am Main (DE)

(57) **Abstract**

The invention is about a wind-powered hydrogen plant (1) with a wind turbine (2) electrically coupled to an electrolysis system (3) with rows of electrolyser stacks (4), the wind turbine (2) comprising a generator (5) with a rotor (6) and a stator (7), the stator (7) being divided into winding segments (8) with an electrical insulation between individual winding segments (8), the number of which is a multiple of three, each group of three winding segments (8) forming a three-phase system connecting to one of individual rectifier circuits (9), and the electrolysis system (3) comprising individual DC/DC converters (10), each connected to a row of electrolyser stacks (4), wherein a DC output power of all individual rectifier circuits (9) is kept separated and the individual rectifier circuits (9) are each directly connected to one of the individual DC/DC converters (10). The invention also relates also to a method for converting wind energy into electrical energy for the operation of an electrolysis system (3).

## Description

### TECHNICAL FIELD

The present invention is about an electric circuit for a wind power plant connected to an electrolysis system, and a method for converting wind energy into electric power for an electrolysis system.

### BACKGROUND

The present invention relates to the field of renewable energy and, more specifically, to the development of future Offshore Wind-Hydrogen production plants that operate independently in an island mode configuration without grid connection. These production plants utilize high-power wind turbines with a rated output of over 10 MW, making them prime candidates for integration with electrolyser systems, as the larger scale of these systems yields significant cost advantages.

Compared to land-based installations, the usually higher and more constant wind speed in the offshore area allows the electrolyser to be supplied with a more constant power output throughout operation, thus optimising the capacity factor of the plant. The hydrogen gas generated can be collected, stored, and transported for various industrial applications, contributing to the advancement of renewable energy utilization and reducing the carbon footprint.

The future Offshore Wind-Hydrogen production plants' island mode operation eliminates reliance on external power grids, enhancing system reliability and reducing transmission losses and cost, as expensive submarine cables for a connection to an onshore electrolysis plant are no longer required. This autonomy and resilience, coupled with the cost advantages of large-scale systems, sets the invention apart from conventional renewable energy setups.

The generator of the wind turbine generates alternating current (AC) at low frequency, typically low voltage. To efficiently split water into hydrogen and oxygen through electrolysis, a high direct current (DC) is required. As a result, there is a need for a reliable and efficient power electronics stage to bridge the gap between the generator's output and the electrolyser rows.

In current solutions, between the generator and the wind turbine a high number of conversion steps is required and therefore the overall efficiency of the system decreases as each conversion step brings losses in the system.

Moreover, some solutions require the use of complex isolated DC/DC converters which are not available on the market yet and require extensive engineering to be designed.

The invention relates to the power electronics topology used between the generator and the rows of electrolyser stacks. Here, "row" refers to a group of series-connected stacks supplied by a single individual power converter, whereas "stack" refers to a group of series-connected electrolyser cells sharing the same balance-of-stack connection.

### SUMMARY OF INVENTION

The object of the invention is to provide a wind-powered hydrogen plant and a method for converting wind energy into electrical energy for the operation of an electrolysis system.

In particular, the present invention aims to achieve the following objectives for the power electronics system between the electrolyser rows and the wind turbine generator:
- Maximum Efficiency: The power electronics system must be highly efficient to fully capitalize on the advantages of connecting the two systems closely. High efficiency guarantees the optimal utilization of wind turbine-generated energy, ensuring a much more steady and reliable supply of high DC current to the electrolyser rows than is the case with electrolysers powered by electricity from onshore wind turbines. This enhances the overall system efficiency and flexibility and maximizes hydrogen production.
- Galvanic Isolation: The power electronics system should provide galvanic isolation between the electrolyser rows to limit the ground current flowing between the rows, which could degrade the cells. Galvanic isolation protects the electrolyser cells from unwanted currents and prevents electrochemical reactions that may reduce the cells' lifespan and performance.

This may be achieved with a wind-powered hydrogen plant according to claim 1 and a method according to claim 5. The dependent claims describe advantageous developments and modifications of the invention.

In accordance with the invention there is provided a wind-powered hydrogen plant with a wind turbine electrically coupled to an electrolysis system with rows of electrolyser stacks, the wind turbine comprising a generator with a rotor and a stator, the stator being divided into winding segments with an electrical insulation between individual winding segments, the number of which is a multiple of three, each group of three winding segments forming a three-phase system connecting to one of individual rectifier circuits, and the electrolysis system comprising individual DC/DC converters, each connected to a row of electrolyser stacks, wherein a DC output power of all individual rectifier circuits is kept separated and the individual rectifier circuits are each directly connected to one of the individual DC/DC converters.

Galvanic isolation through segmentation aims to electrically isolate the different winding segments from each other. Each segment is individually connected to the inverter, allowing for better control of electrical energy and, in particular, for redundancies and higher availability of the system. Segmentation enables easier construction of the stator and scalability, as well as more precise control of the electrical current flow in the windings, reducing losses, and optimizing the generator's performance.

Furthermore, galvanic isolation through segmentation helps minimize the risk of electrical short circuits. Without galvanic isolation and segmentation, a defect or damage in one area of the winding could lead to direct current flow into adjacent areas. This could result in undesired currents and potentially damage the generator.

Segmenting and galvanically isolating the windings also facilitate better diagnosis of malfunctions or defects in the generator. By isolating individual winding segments, the source of problems can be more accurately localized, simplifying maintenance and repair procedures.

With the invention an isolated DC/DC converter is not required anymore, as the galvanic isolation is being provided by the segmentation of the stator windings. A non-isolated converter is sufficient.

Non-isolated DC/DC converters are typically more cost-effective to manufacture and implement compared with isolated DC/DC converters. The absence of isolation components, such as transformers, reduces material costs and assembly complexity, making non-isolated converters a more economical choice for many applications. Finally, non-isolated converters are generally smaller and lighter compared to isolated converters. The elimination of bulky isolation components contributes to a compact and lightweight design, making them suitable for spaceconstrained applications or portable devices.

In an advantageous embodiment of the invention, the winding segments belonging to a particular group are evenly distributed around the circumference of the stator in a generator. This strategic arrangement ensures that each group can operate independently, without any adverse effects on the distribution of torque and flux in the rotor. By evenly spreading the winding segments, the generator's stator can efficiently harness the power generated by each group, without causing imbalances in the overall torque distribution. As a result, the generator can maintain stable and reliable performance, even when subjected to varying loads or operating conditions. This even distribution of winding segments also enhances the overall efficiency and effectiveness of the generator, allowing it to operate optimally and generate electricity with minimal energy losses. The ability to operate each group independently grants the generator greater flexibility and adaptability, enabling it to respond effectively to changes in power demands and optimize its performance under different situations.

In another advantageous embodiment of the invention the generator is a permanent magnet synchronous generator (PMSG). This choice of generator type offers several distinct advantages compared to other types of generators.

Firstly, one significant advantage of a PMSG is that it does not require a separate excitation system. Traditional generators, such as induction generators, often rely on separate excitation systems to generate the magnetic field required for electricity production. In contrast, PMSGs utilize permanent magnets to create the magnetic field directly, eliminating the need for additional excitation equipment. This design simplifies the generator's construction and reduces the complexity of its operation, leading to a more straightforward and efficient system.

Secondly, PMSGs generally require less maintenance compared to other generator types. Traditional generators with rotating windings and brushes, like brushed DC generators, are more prone to wear and tear due to friction and mechanical contacts. On the other hand, PMSGs have a simpler and more robust design with fewer moving parts, resulting in reduced maintenance needs and longer service life.

Thirdly, PMSGs exhibit high efficiency in converting mechanical energy into electrical energy. The permanent magnets in the generator provide a constant magnetic field, which allows for a more efficient conversion process, reducing energy losses during operation. As a result, PMSGs can achieve higher levels of electrical efficiency, making them a preferred choice in applications where energy efficiency is crucial.

Lastly, due to their simplified construction and reduced reliance on additional excitation systems, PMSGs can be designed to have a smaller size and lower weight compared to other types of generators with similar power output. This compact design is advantageous in various applications where space constraints are a concern, such as renewable energy systems, electric vehicles, and portable power generators.

In conclusion, the utilization of a Permanent Magnet Synchronous Generator (PMSG) in this embodiment offers numerous benefits, including the elimination of a separate excitation system, reduced maintenance requirements, high electrical efficiency, and a more compact and lightweight design. These advantages collectively contribute to the overall effectiveness and reliability of the generator, making it an attractive choice for various practical applications that demand efficient and dependable power generation.

In yet another advantageous embodiment of the invention the number of individual rectifier circuits is equal to the number of DC/DC converters and the number of rows. Equalizing the number of individual rectifier circuits and DC/DC converters allows for a modular system design. Each rectifier circuit can be dedicated to a specific DC/DC converter, forming discrete units that can be easily replicated and scaled. This modularity simplifies system maintenance, troubleshooting, and future expansions.

The method according to the present invention is characterized by coupling a a wind-driven rotor to a generator with segmented stator, wherein an output current of a group of winding segments of the generator is converted into direct current; wherein the generator produces at least two separate output currents; wherein the at least two separate output currents are rectified into at least two separate direct currents; wherein the at least two separate direct currents are supplied to at least two DC/DC converters and the DC/DC converters each supply current to an electrolyser row of the electrolysis system.

The advantages of this method largely correspond to the advantages of the wind-powered hydrogen plant mentioned above. In particular, the number of conversion steps is significantly reduced, improving efficiency, and as the galvanic isolation is being provided by the segmentation of the stator windings and maintained, the use of complex and costly isolated DC/DC converters is not necessary.

Further, the DC/DC converters employed in this solution are available in the market and don't require much engineering efforts and as the winding segments are mechanically distributed over the stator, they can be independently operated.

In conclusion, the future Offshore Wind-Hydrogen production plant described in this patent application represents a groundbreaking approach to harnessing renewable energy and producing hydrogen efficiently. The integration of high-power wind turbines and electrolyser systems in an island mode configuration showcases the potential for sustainable, grid-independent hydrogen production on a commercial scale.

### BRIEF DESCRIPTION OF DRAWINGS

**FIG 1** shows a scheme of a prior art wind-powered hydrogen plant,
**FIG 2** shows an actual power electronics interface for a wind-powered hydrogen plant as known from the prior art,
**FIG 3** shows a solution for a wind-powered hydrogen plant known from the prior art with a lower component count compared to the example of **FIG 2****,** and
**FIG 4** shows a wind-powered hydrogen plant according to the invention.

### DESCRIPTION OF EMBODIMENTS

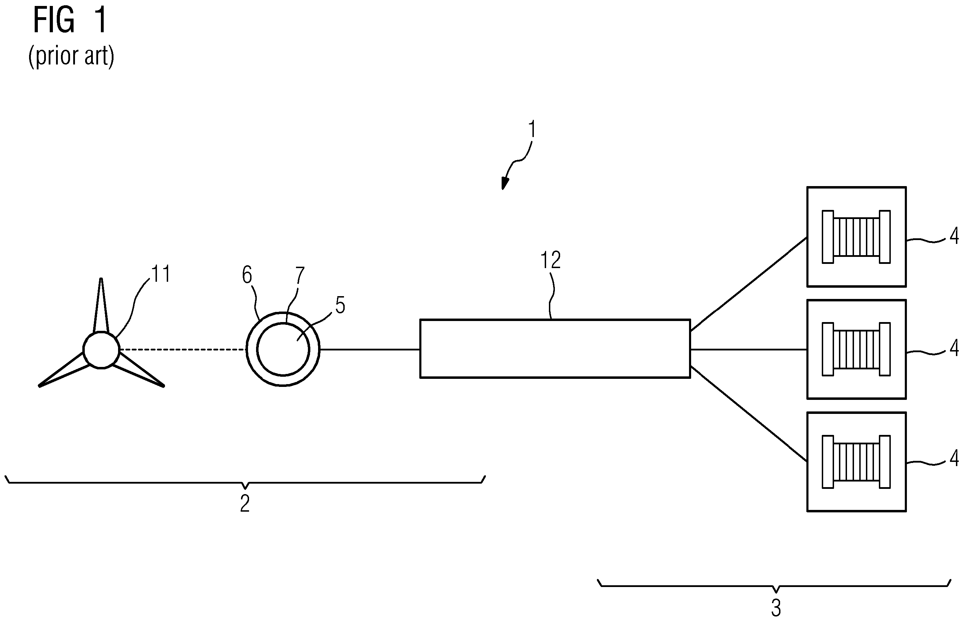

**FIG 1** illustrates the fundamental configuration of a wind-powered hydrogen plant 1. The setup includes a wind turbine featuring rotor blades and a hub 11, along with a generator 5 containing a rotor 6 and a stator 7. Additionally, the wind-powered hydrogen plant 1 comprises an electrolysis system 3 housing rows 4 of electrolyser stacks.

The generator 5 supplies an alternating current with low frequency (usually low voltage), which must be converted to split water with high direct current. For this purpose, a power converter system 12 is connected between the generator 5 of the wind turbine 2 and the electrolysis system 3.

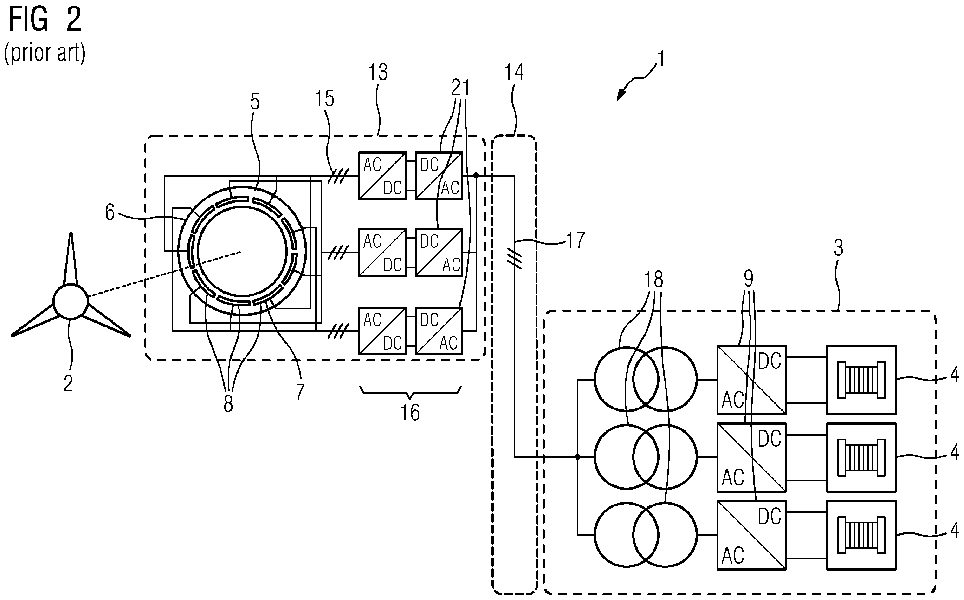

As of today, there is no established solution for wind-powered hydrogen plants 1. Nonetheless, certain concepts and projects suggest employing the solution depicted in **FIG 2****.** The main driver for this solution is that the power electronics and electrical design of the wind turbine 2 are unchanged compared to conventional gridconnected wind turbines.

The generator 5 is arranged in a nacelle 13. Positioning the generator 5 in the nacelle 13 facilitates maintenance, ensures safety, and contributes to the efficient operation of the wind power plant. the generator 5 is a segmented-stator Permanent Magnet Synchronous Generator (PMSG) that offers several advantages over conventional generator types, including the elimination of a separate excitation system, reduced maintenance needs, higher efficiency, and a more compact size.

The stator 7 of the PMSG is composed of several winding segments 8 to share the load and facilitate the design. A big advantage of this type of segmented construction is its modularized architecture, which can be expanded on and on. Paralleling more winding segments 8 systems will linearly increase the stator power rating. A three-phase system 15 is created by winding through different mechanically distributed winding segments 8 over the stator 7. The systems are galvanically isolated from each other.

Each three-phase system 15 is connected to a separated AC/DC - DC/AC stage 16 to convert the variable AC frequency to a fixed one. All the separate inverters 21 are connected in parallel to a main AC bus 17 to transport down the tower 14 the AC power. Then, each electrolyser row 4 is being supplied by its own transformer 18 + rectifier 9 to deliver the DC current required for the electrolysis and with isolation between the rows 4 provided by the transformers 18. As these transformers 18 are operated at 50 or 60Hz, they are bulky, heavy and expensive.

Eventually, between the generator and the wind turbine a high number of conversion steps is required and therefore the overall efficiency of the system decreases as each conversion step brings losses in the system.

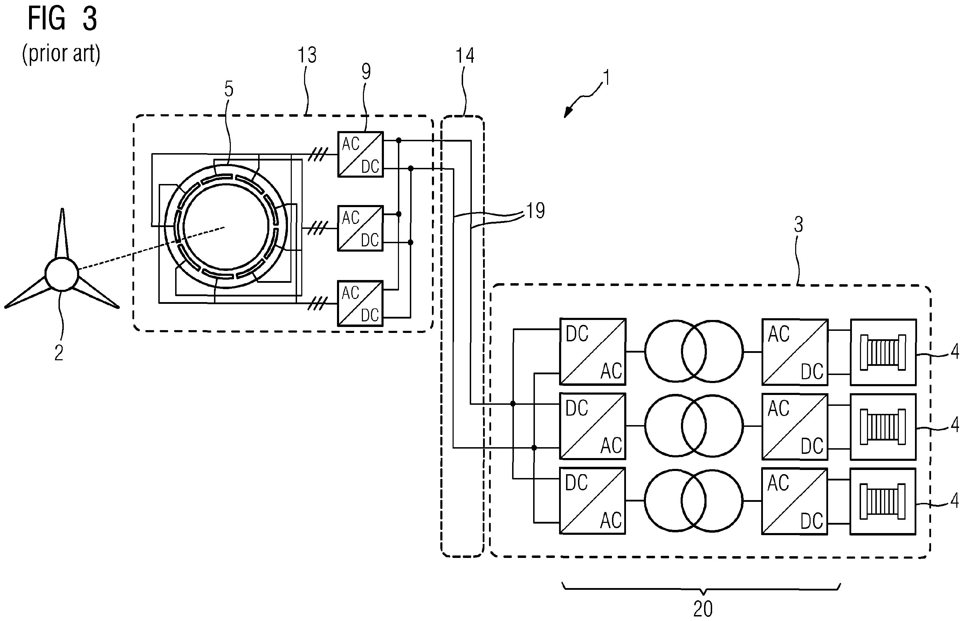

Another currently discussed solution is represented in **FIG 3****,** where the AC power transportation down the tower 14 is being replaced by a DC power transportation 19. The inverter stage of **FIG 2** delivering the fixed AC frequency is eliminated and an isolated DC/DC converter 20 is employed to control the power flow to the rows 4 and provide galvanic isolation.

However, again this solution requires a high number of conversion steps which impact the overall efficiency. Furthermore, implementing this setup necessitates the utilization of complex isolated DC/DC converters 20 that are not currently available in the market, demanding substantial engineering efforts for their design and development.

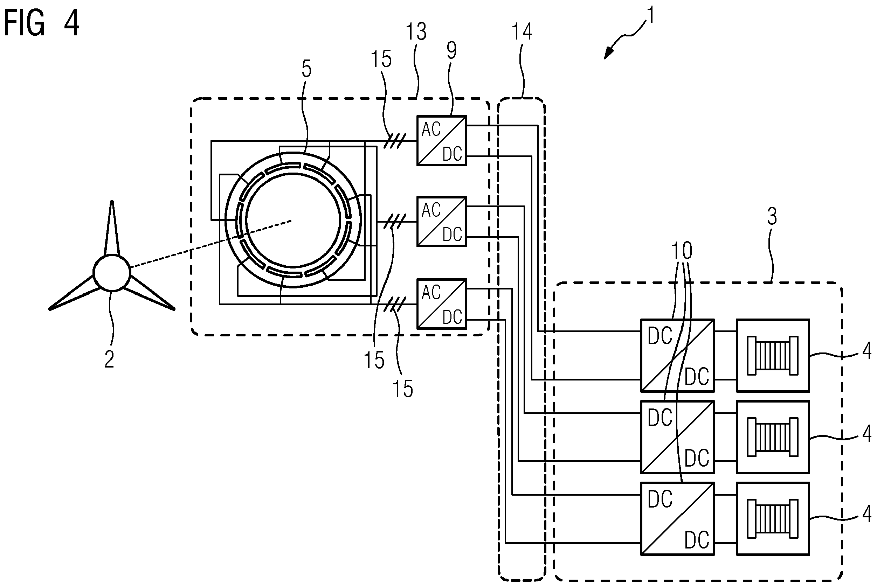

**FIG 4** shows the inventive solution. Each three-phase system 15 created by the segmented-PMSG 5 is rectified by individual rectifier circuits 9. The DC output power of all systems are kept separated and brought down the tower 14 where non-isolated DC/DC converters 10 control the power flow to the electrolyser rows 4.

Indeed, the need for an isolated DC/DC converter 20 is eliminated due to the galvanic isolation provided by the segmentation of the stator 7 windings. By mechanically distributing the three-phase systems 15 across the stator 7, each three-phase system 15 can operate independently without affecting the distribution of rotor torque.

### REFERENCE SIGNS LIST

- 1: wind-powered hydrogen plant
- 2: wind turbine
- 3: electrolysis system
- 4: row of electrolyser stacks
- 5: generator
- 6: rotor
- 7: stator
- 8: winding segment
- 9: rectifier circuit
- 10: DC/DC converter
- 11: rotor blades with hub
- 12: power converter system
- 13: nacelle
- 14: tower
- 15: three-phase system
- 16: AC/DC - DC/AC stage
- 17: main AC bus
- 18: transformer
- 19: DC power transportation
- 20: isolated DC/DC converter
- 21: inverter

## Claims

1. A wind-powered hydrogen plant (1) with a wind turbine (2) electrically coupled to an electrolysis system (3) with rows of electrolyser stacks (4), the wind turbine (2) comprising a generator (5) with a rotor (6) and a stator (7), the stator (7) being divided into winding segments (8) with an electrical insulation between individual winding segments (8), the number of which is a multiple of three, each group of three winding segments (8) forming a three-phase system connecting to one of individual rectifier circuits (9), and the electrolysis system (3) comprising individual DC/DC converters (10), each connected to a row of electrolyser stacks (4), **characterised in that** a DC output power of all individual rectifier circuits (9) is kept separated and the individual rectifier circuits (9) are each directly connected to one of the individual DC/DC converters (10).

2. The wind-powered hydrogen plant (1) according to claim 1, wherein the DC/DC converters (10) are non-isolated.

3. The wind-powered hydrogen plant (1) according to one of claims 1 to 2, wherein the winding segments (8) of a group are evenly distributed over the stator (7) in the circumferential direction.

4. The wind-powered hydrogen plant (1) according to one of the preceding claims, wherein the generator (5) is a permanent magnet synchronous generator.

5. The wind-powered hydrogen plant (1) according to one of the preceding claims, wherein the number of individual rectifier circuits (9) is equal to the number of DC/DC converters (10) and the number of rows (4) of electrolyser stacks.

6. Method for converting wind energy into electrical energy for the operation of an electrolysis system (3), wherein a wind-driven rotor (6) is coupled to a generator (5) with segmented stator (7), wherein an output current of a group of winding segments (8) of the generator (5) is converted into direct current; wherein the generator (5) produces at least two separate output currents; wherein the at least two separate output currents are rectified into at least two separate direct currents; **characterised in that** the at least two separate direct currents are supplied to at least two DC/DC converters (10) and the DC/DC converters (10) each supply current to an electrolyser row (4) of the electrolysis system (3).
